# EUROPÄISCHE PATENTSCHRIFT

(11) **EP 1 291 214 B1**
(45) Veröffentlichungstag und Bekanntmachung des Hinweises auf die Patenterteilung: **06.09.2006**
(21) Anmeldenummer: 02014384.8
(22) Anmeldetag: 28.06.2002
(51) Int. Cl.: B60J 7/02, B60J 7/057

(54) **Rahmen für ein Fahrzeug-Schiebedach oder-Schiebehebedach**
Frame for sliding or sliding and tilting roof for vehicles
Cadre pour toit coulissant ou coulissant basculant pour véhicule automobile

(30) Priorität: 11.09.2001 DE 10144738
(43) Veröffentlichungstag der Anmeldung: 12.03.2003
(73) Patentinhaber: ArvinMeritor GmbH, 63128 Dietzenbach (DE)
(72) Erfinder: Weiss, Edgar, 63755 Alzenau (DE); Imgram, Bardo, Dipl.-Ing., 63500 Seligenstadt (DE); Oechel, Holger, 60388 Frankfurt (DE); Bachmann, Hubert, Dipl.-Ing., 67125 Dannstadt-Schauernheim (DE)
(74) Vertreter: Oppermann, Ewald

(56) Entgegenhaltungen:
- EP-A- 0 520 523
- DE-A- 2 836 801
- DE-A- 2 856 015
- DE-A- 3 532 104
- DE-A- 19 732 700
- DE-C- 4 014 487
- FR-A- 2 771 970
- US-A- 6 065 801

## Beschreibung

Die Erfindung bezieht sich auf einen aus mehreren Teilen zusammengesetzten Rahmen für ein Fahrzeug-Schiebedach oder -Schiebehebedach, entsprechend dem Oberbegriff des Patentanspruchs 1.

Bei einem derartigen bekannten Rahmen (DE 40 14 487 C1) sind die Antriebskabel außerhalb des aus Kunststoff spritzgeformten Vorderteils in freiliegenden Führungsrohren verschiebbar geführt. Die Motorhalteplatte ist an das Vorderteil einstückig angeformt und ragt als Vorsprung des Vorderteils in Fahrtrichtung raumzehrend nach vorn. Bei einem anderen bekannten Rahmen für ein Fahrzeugschiebedach (DE 197 46 545 A1) sind die Antriebskabel zwar nicht mehr außerhalb des aus Kunststoff spritzgeformten Vorderteils in Führungsrohren geführt, aber innerhalb des Vorderteils teils in nach oben offenen Nuten und teils in daran anschließenden Rohren.

Der Erfindung liegt die Aufgabe zugrunde, einen Rahmen der eingangs angegebenen Ausbildung bereitzustellen, der sich kostengünstig und aus wenigen Teilen herstellen und montieren läßt.

Diese Aufgabe wird erfindungsgemäß durch die Merkmale des Anspruchs 1 gelöst. Vorteilhafte oder zweckmäßige Weiterbildungen gehen aus den Unteransprüchen hervor und sind nachfolgend ebenfalls beschrieben.

Die getrennte Herstellung der Motorhalteplatte als spritzgeformtes Kunststoffteil mit relativ geringen Abmessungen erlaubt neben weiteren Vorteilen eine für unterschiedliche Rahmenausführungen und/oder -abmessungen standardisierte Ausbildung derselben, bei Einhaltung enger Abmessungstoleranzen. Unterschiedliche Rahmen bedürfen zur Aufnahme der Standard-Motorhalteplatte lediglich einer ebenfalls standardisierten Ausnehmung. Die Einformung der offenen Kabelkanäle ermöglicht eine erleichterte Einlegung der Antriebskabel in das Vorderteil und den Verzicht auf zusätzlich herzustellende und anzubringende Führungsrohre. Wie alle Elemente des Vorderteils sind auch die Abdeckelemente für die Kabelkanäle kostengünstig herzustellende Kunststoffspritzteile. Sie bilden nach ihrer Montage am Vorderteil mit ihren Innenflächen Anlage- und Führungsflächen für die in die Kabelkanäle eingelegten Antriebskabel.

In der Motorhalteplatte sind gemäß Anspruch 2 Durchführungskanäle vorgesehen, in welche die beiden Antriebskabel bei der Montage eingeschoben werden. Da die Durchführungskanäle die Antriebskabel eng mit Verschiebespiel umschließen, müssen an der Eingriffsstelle der Antriebskabel mit dem Antriebsritzel des Motors keine besonderen den Eingriff sicherstellenden Maßnahmen, wie die herkömmliche Anbringung eines Federbleches mit seiner Geräuschproblematik, getroffen werden.

Vorzugsweise sind die Durchführungskanäle in der Motorhalteplatte hierbei wie im Anspruch 3 angegeben ausgebildet, d.h. besitzen ihren engsten Querschnitt an der Stelle des Angriffseingriffs zwischen den Antriebskabeln und dem Antriebsritzel. Der Unterdrückung der Geräuschbildung bei Antriebsverschiebungen der Antriebskabel dienen auch die im Anspruch 3 angegebenen Übergangsfasen oder -abrundungen.

Zur Erzielung einer genauen Ausrichtung der Durchführungskanäle in der Motorhalteplatte zu den daran anschließenden Kabelkanälen in dem Vorderteil des Rahmens sind die im Anspruch 4 angegebenen Maßnahmen von Vorteil.

Die Motorhalteplatte und das Vorderteil können entsprechend Anspruch 5 mit Rastelementen zur Vorverrastung bei der Montage des Rahmens und des Motors ausgerüstet sein.

Die Verwendung einer von dem Vorderteil getrennt hergestellten Motorhalteplatte ermöglicht den vorteilhaften Einsatz von Kunststoffen mit unterschiedlichen Eigenschaften für diese Teile, wie im Anspruch 6 angegeben ist.

Nach dem Positionieren und Vorverrasten der Motorhalteplatte an dem Vorderteil kann die feste Vereinigung dieser Teile zweckmäßig bei der Montage des Motors auf die im Anspruch 7 angegebene Weise erfolgen.

Die Abdeckelemente können an dem Vorderteil des Rahmens entsprechend Anspruch 8 durch eine Kombination von Klipselementen und Verschraubungen befestigt werden. Dieses eröffnet die vorteilhafte Möglichkeit, die Abdeckelemente bei der Montage des Rahmens zunächst mit dem Vorderteil zu verklipsen, bevor die eine feste Verbindung herstellenden Verschraubungen erfolgen. Hierbei können durch Öffnungen in den Abdeckelementen eingeführte Schrauben direkt in den Kunststoff des Vorderteils und/oder in das Vorderteil eingespritzte Gewindebuchsen eingeschraubt werden.

Die Vereinigung der Seitenteile mit dem Vorderteil zum Rahmen in gegenseitig exakt positionierter Lage und die Befestigung dieser Teile des Rahmens aneinander wird zweckmäßig durch die in den Ansprüchen 9 und 10 angegebenen Maßnahmen erreicht, ohne daß dafür Verprägungen der Seitenteile erforderlich sind.

Da das Vorderteil und die Seitenteile wie bei derartigen Rahmen üblich mit Wasserkanälen versehen sind, über welche in die Schiebedachkonstruktion eingedrungenes Wasser abgeführt wird, müssen diese Rahmenteile gegeneinander abgedichtet werden. Dieses geschieht auf vorteilhafte Weise durch die im Anspruch 11 angegebenen in das Vorderteil eingeformten und mit einem Dichtmittel befüllbaren Abdichtkanäle, wobei die Zuführung des Dichtmittels zweckmäßig auf die im Anspruch 12 angegebene Weise erfolgt.

Weitere Einzelheiten der Erfindung sind nachfolgend anhand der Ausführungsbeispiele teilweise in schematischer Form darstellenden Zeichnungen näher erläutert. Darin zeigt:
- Fig. 1: eine explosionsbildartige perspektivische Darstellung der in Fahrtrichtung vorderen linken Ecke des Rahmens, mit abgebrochen gezeigtem Vorderteil und linksseitigem Seitenteil,
- Fig. 2: die Draufsicht auf die in Fahrtrichtung vordere linke Ecke des abgebrochen gezeigten fertig montierten Rahmens,
- Fig. 3: die Ansicht des Rahmens von hinten,
- Fig. 4: die Unteransicht der in Fig. 2 gezeigten Rahmenecke,
- Fig. 5: die Unteransicht des Vorderteils mit montierten Abdeckelementen, vorverrasteter Motorhalteplatte, noch ohne Motor, und in Fahrtrichtung linksseitigem, abgebrochen dargestelltem Seitenteil,
- Fig. 6: die Draufsicht auf die in Fig. 5 gezeigte Anordnung,
- Fig. 7: die Unteransicht des Vorderteils ohne Abdeckelemente und ohne Motorplatte,
- Fig. 8: die Draufsicht auf das Vorderteil gemäß Fig. 7,
- Fig. 9: den Schnitt entsprechend der Schnittverlaufslinie IX-IX in Fig. 2,
- Fig. 10: den Schnitt entsprechend der Schnittverlaufslinie X-X in Fig. 2,
- Fig. 11: den Schnitt entsprechend der Schnittverlaufslinie XI-XI in Fig. 2,
- Fig. 12: den Schnitt entsprechend der Schnittverlaufslinie XII-XII in Fig. 2,
- Fig. 13: den Schnitt entsprechend der Schnittverlaufslinie XIII-XIII in Fig. 2,
- Fig. 14: den Schnitt entsprechend der Schnittverlaufslinie XIV-XIV in Fig. 2,
- Fig. 15: den Schnitt entsprechend der Schnittverlaufslinie XV-XV in Fig. 2,
- Fig. 16: den abgebrochenen Schnitt entlang der Linie XVI-XVI in Fig. 4 und
- Fig. 17: den abgebrochenen Schnitt entlang der Linie XVII-XVII in Fig. 4.

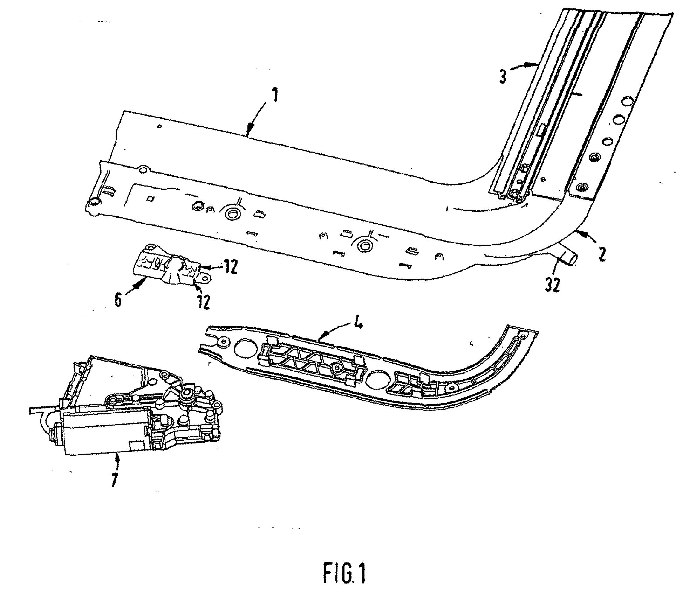

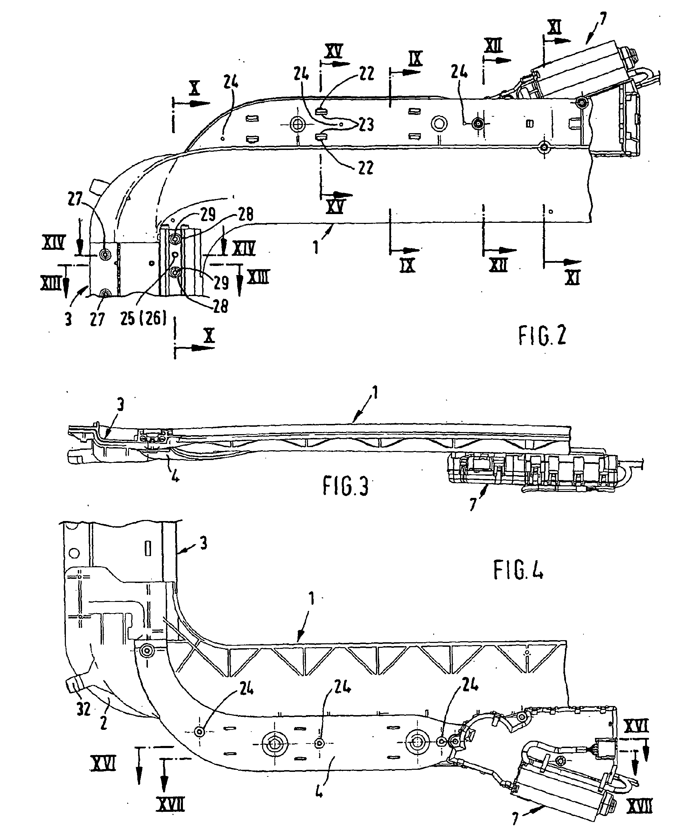

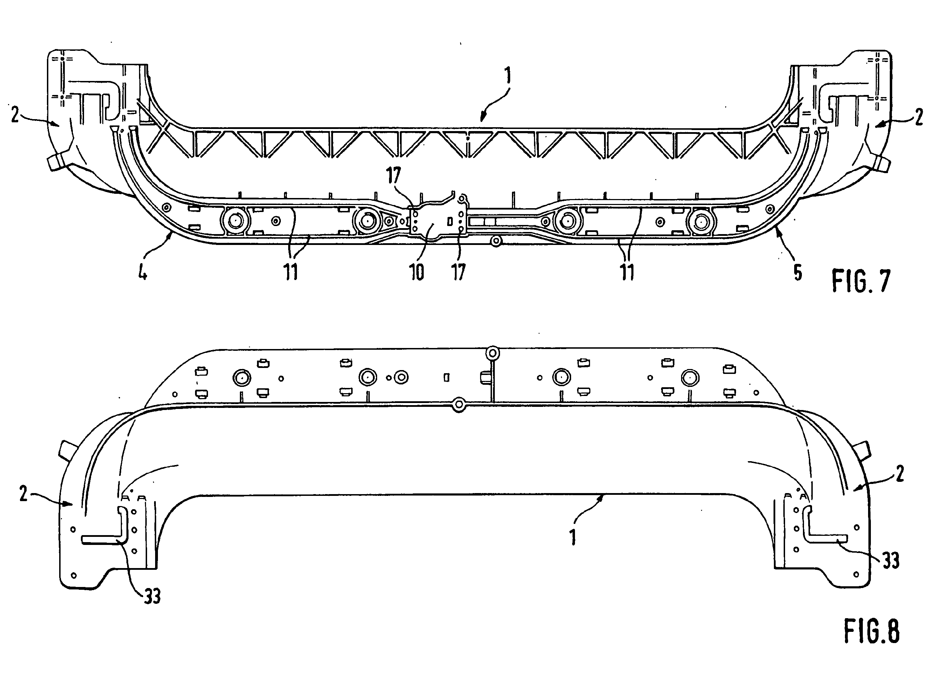

Die Einzelteile des Rahmens gehen aus Fig. 1 hervor. Dargestellt sind das abgebrochen gezeichnete Vorderteil 1 mit dem in Fahrtrichtung linksseitigen Eckbereich 2 (der rechtsseitige Eckbereich ist spiegelbildlich geformt, wie z.B. aus Fig. 8 hervorgeht), das dem Eckbereich 2 aufgelagerte abgebrochen gezeichnete linksseitige Seitenteil 3 (das rechtsseitige Seitenteil ist spiegelbildlich ausgeführt), das linke Abdeckelement 4 (das etwa spiegelbildliche rechte Abdeckelement 5 geht aus Fig. 7 hervor), die Motorhalteplatte 6 und der Elektrogetriebemotor 7.

Das Vorderteil 1, die Abdeckelemente 4, 5 und die Motorhalteplatte 6 sind jeweils aus geeigneten Kunststoffen spritzgeformt, wobei für die einzelnen Teile je nach Beanspruchung unterschiedliche Kunststoffe zum Einsatz gelangen können. So kann die Motorhalteplatte 6 aus einem Kunststoff mit höherer Festigkeit, insbesondere einer höheren Abriebfestigkeit, hergestellt werden als die anderen Teile. Der für die Motorhalteplatte 6 eingesetzte Kunststoff kann auch durch Kohlefasern armiert sein. Wie die Zeichnungen erkennen lassen, können die aus Kunststoff spritzgeformten Teile in geeigneter Weise zur Erhöhung der Steifigkeit verrippt sein, wodurch auch verhältnismäßig geringe Wanddicken ermöglicht werden.

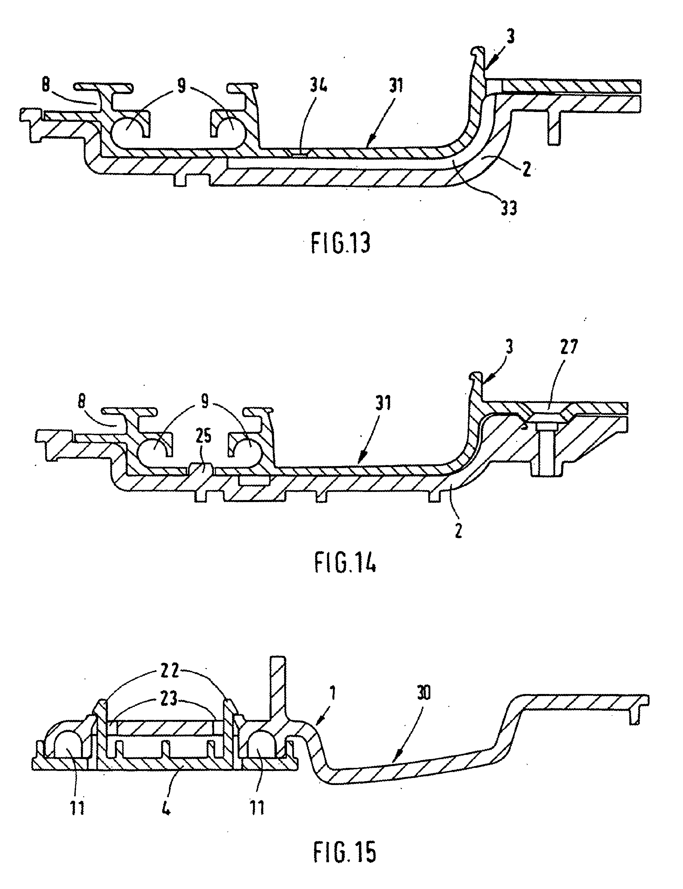

Die beispielsweise aus einer geeigneten Aluminiumlegierung stranggepreßten und auf die erforderliche Länge geschnittenen Seitenteile 3 des Rahmens bilden Führungsschienen 8 für den (nicht dargestellten) bewegbaren Deckel der Dachkonstruktion und besitzen, wie die Fig. 13 und 14 veranschaulichen, Kabelführungskanäle 9 für darin drucksteif verschiebbar geführte, flexible Antriebskabel (nicht dargestellt) für den Antrieb des bewegbaren Deckels.

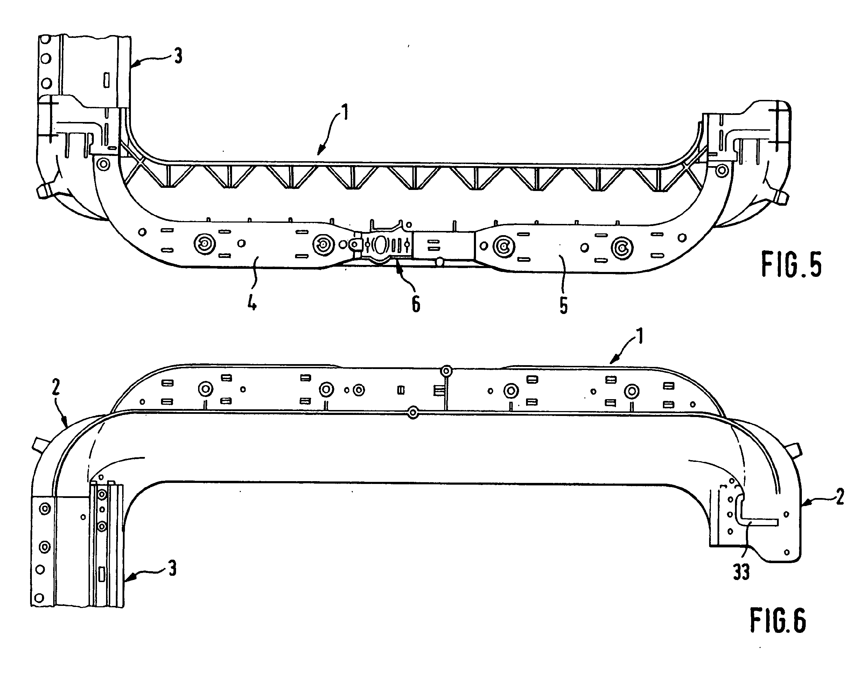

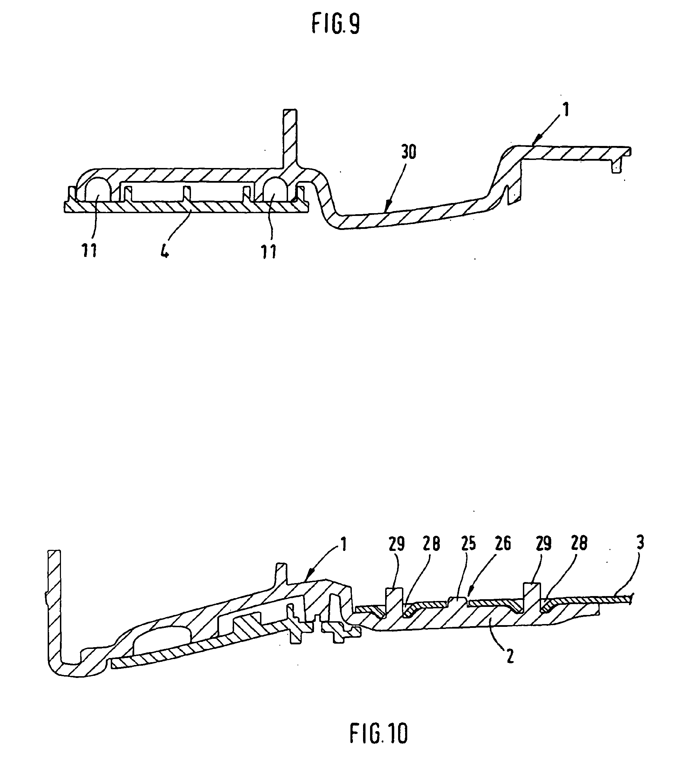

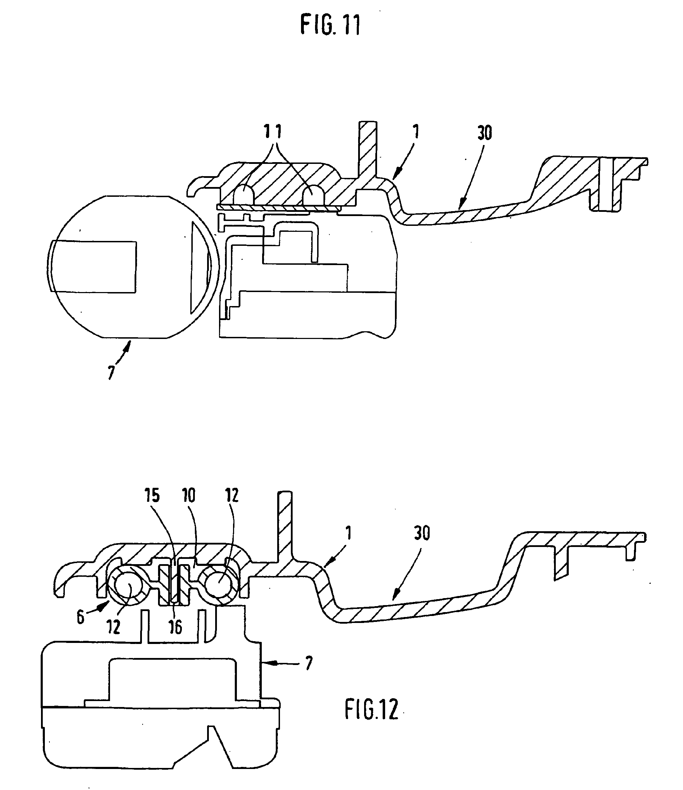

In das Vorderteil 1 sind zu beiden Seiten einer für die Aufnahme der Motorhalteplatte 6 eingeformten Ausnehmung 10, die am besten aus Fig. 7, aber auch aus den Fig. 12, 16 und 17 ersichtlich ist, nach unten offene Kabelkanäle 11 für die Aufnahme der darin drucksteif geführten flexiblen Antriebskabel eingeformt. Diese Kabelkanäle 11 werden nach Einlegung der Antriebskabel durch die beiden positioniert zu befestigenden Abdeckelemente 4, 5 geschlossen, wie aus Fig. 5 in Verbindung mit den Fig. 9, 11 und 15 hervorgeht.

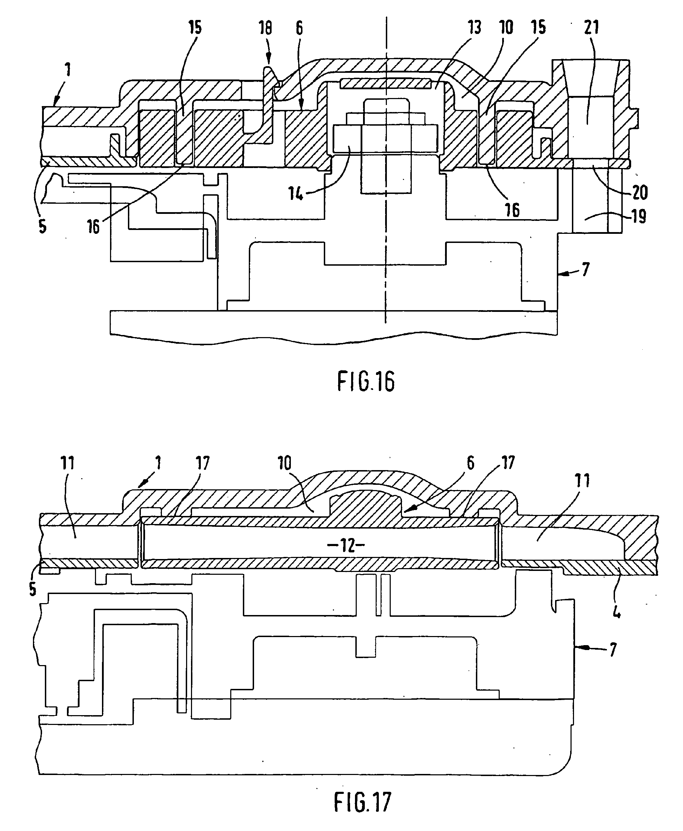

Die Motorhalteplatte 6 weist zwei voneinander beabstandete achsparallele Durchführungskanäle 12 auf, von denen in Fig. 17 nur einer dargestellt ist und die in Fig. 1 anhand der einseitig sichtbaren Kanalöffnungen angedeutet sind. Nach der Anbringung der Motorhalteplatte 6 in der Ausnehmung 10 des Vorderteils 1 fluchten die Durchführungskanäle 12 stufenlos mit den Kabelkanälen 11. Ausgehend von einer zentralen Aussparung 13 in der Motorhalteplatte 6 für das in Fig. 16 schematisch dargestellte Antriebsritzel 14 sind gegenüberliegende Durchtrittsöffnungen (nicht dargestellt) in den Wandungsbereichen der Motorhalteplatte 6 zwischen den Durchführungskanälen 12 und der zentralen Aussparung 13 vorgesehen, die dem ständigen Eingriff des Antriebsritzels 14 mit den Antriebskabeln dienen. Die Antriebskabel stehen mit dem bewegbaren Deckel der Dachkonstruktion in Antriebsverbindung. Das Antriebsritzel 14 besitzt eine Außenverzahnung, mit der es mit den beiden Antriebskabeln in einem zahnstangenähnlichen Zahneingriff steht. Der Motor 7 kann das Antriebsritzel 14 wahlweise in der einen oder der anderen Drehrichtung antreiben, wodurch jeweils gegenläufige Verschiebebewegungen der beiden Antriebskabel hervorgerufen werden. Dieses Antriebssystem wird seit Jahrzehnten für Schiebedachantriebe benutzt und bedarf daher hier keiner näheren Erläuterung.

Wie am Beispiel des in Fig. 17 gezeigten einen Durchführungskanals 12 ersichtlich ist, weisen die Durchführungskanäle 12 einen von den Kanalenden her bis zur Eingriffstelle mit dem Antriebsritzel 14 stetig abnehmenden Kreisquerschnitt auf, der an seiner engsten Stelle nur um ein Verschiebespiel größer als der Außendurchmesser der Antriebskabel ist. Hierdurch wird sichergestellt, daß die Antriebskabel unter der Einwirkung des Zahndrucks dem Zahnritzel nicht ausweichen können, sondern von den betreffenden Wandungsbereichen der Durchführungskanäle 12 abgestützt werden. Die Durchführungskanäle 12 sind an jeweils beiden Enden mit Übergangsfasen oder -abrundungen versehen, wie in Fig. 17 angedeutet ist. Ähnliche Übergangsfasen oder - abrundungen sind an den benachbarten Eingängen bzw. Ausgängen der Kabelkanäle 11 und auch an den benachbarten Kanten der Abdeckelemente 4,5 vorgesehen.

In der Ausnehmung 10 für die Aufnahme der Motorhalteplatte 6 und an der Motorhalteplatte 6 selbst sind zur genauen Ausrichtung der Durchführungskanäle 12 der Motorplatte 6 zu den anschließenden Kabelkanälen 11 des Vorderteils 1 paarweise angeordnete Positioniervorsprünge 15 und Positionieröffnungen 16 vorgesehen, wie aus den Fig. 12 und 16 hervorgeht. Zur Herbeiführung einer definierten Mehrpunktauflage der Motorhalteplatte 6 sind in der Ausnehmung 10 voneinander beabstandete vorspringende Auflageflächen 17 vorgesehen, von denen in Fig. 17 zwei gezeigt sind. Im Ausführungsbeispiel nach Fig. 7 sind vier Auflageflächen 17 vorgesehen. Die Auflageflächen 17 sorgen für eine exakte Höhenlage der Durchführungskanäle 12 mit Bezug auf die anschließenden Kabelkanäle 11. Die beschriebenen Maßnahmen dienen insgesamt der Erzielung stufenloser Übergänge zwischen den Durchführungskanälen 12 und den anschließenden Kabelkanälen 11 und damit der Erzielung geräuschloser Verschiebebewegungen der Antriebskabel.

Die Motorhalteplatte 6 und das Vorderteil 1 sind im Bereich der Ausnehmung 10 für die Motorhalteplatte 6 mit Rastelementen 18 für eine Vorverrastung der Motorhalteplatte 6 am Vorderteil 1 ausgerüstet, wie Fig. 16 veranschaulicht. Zur festen Verbindung des Vorderteils 1 mit dem Motor 7 ist der Motor 7 mit dem Vorderteil 1 unter Zwischenlage der Motorhalteplatte 6 an mehreren Stellen verschraubt, wie am Beispiel einer dieser Stellen in Fig. 16 gezeigt ist. Zu diesem Zweck sind der Motor 7, die Motorhalteplatte 6 und das Vorderteil 1 mit deckungsgleichen Bohrungen 19 bzw. 20 bzw. 21 versehen.

Die Abdeckelemente 4,5 sind an dem Vorderteil 1 durch eine Kombination von voneinander beabstandeten Klipselementen und Verschraubungen befestigt. Die Klipselemente umfassen Vorsprünge 22 und zugeordnete Aufnahmeschlitze 23, wie z. B. aus Fig. 2 in Verbindung mit Fig. 15 hervorgeht. Die Verschraubungsstellen 24 sind beispielsweise aus den Fig. 2 und 4 ersichtlich.

Die Seitenteile 3 sind von oben auf die Eckbereiche 2 des Vorderteils 1 aufgelegt, wobei an das Vorderteil 1 angeformte Positioniervorsprünge 25 mit in den Seitenteilen 3 angebrachten Positionieröffnungen 26 eingreifen, um die gewünschte exakte Relativlage von Seitenteilen 3 und Vorderteil 1 herbeizuführen, wie aus den Fig. 2 und 10 hervorgeht. Befestigungsmittel sorgen für eine feste Verbindung dieser Teile 1, 3. Als Befestigungsmittel sind im gezeigten Beispiel einerseits Schrauben (nicht dargestellt), die durch Bohrungen 27 in den Seitenteilen 3 in das Vorderteil 1 bzw. dessen Eckbereiche 2 eingeschraubt sind (Fig. 2, 14), und andererseits durch Bohrungen 28 der Seitenteile 3 hindurchgeführte Thermonietvorsprünge 29 der Eckbereiche 2 (Fig. 2, 10) vorgesehen. Durch Erwärmung und Druckausübung auf die Thermonietvorsprünge 29 werden diese deformiert und in den Bohrungen 28 vernietet.

Sowohl das Vorderteil 1 als auch die Seitenteile 3 sind in der bei derartigen Rahmen üblichen Weise mit nach oben offenen miteinander kommunizierenden Wasserkanälen 30 bzw. 31 ausgestattet, wie beispielsweise aus Fig. 11 bzw. 13 hervorgeht. Das sich in den Wasserkanälen 30, 31 ansammelnde Wasser wird über in den Eckbereichen 2 angebrachte Rohrstutzen 32 (z.B. Fig. 1) abgeführt. Aus Gründen dieser Wasserführung sind das Vorderteil 1 und die Seitenteile 3 gegeneinander abzudichten, was entsprechend dem gezeigten Ausführungsbeispiel dadurch erfolgt, daß in den Auflagebereichen der Seitenteile 3 auf das Vorderteil 1 bzw. auf die Eckbereiche 2 des Vorderteils 1 im Vorderteil/Eckbereich jeweils ein Abdichtkanal 33 eingeformt ist, wie aus Fig. 8 in Verbindung mit Fig. 13 hervorgeht. Diese Abdichtkanäle 33 sind mit einem zunächst flüssigen Dichtmittel oder auch Kleber befüllbar. Das Dichtmittel/Kleber kann durch Bohrungen 34 in den Seitenteilen 3 hindurch den Abdichtkanälen 33 zugeführt werden, wie Fig. 13 verdeutlicht. Das Dichtmittel bzw. der Kleber füllt die Abdichtkanäle vollständig aus und legt sich dabei dicht an alle die Abdichtkanäle begrenzenden Wandflächen.

Vorgeschlagen wird ein Rahmen für Fahrzeugdächer aller üblichen Bauarten, wie Schiebedächer, Schiebehebedächer und Oberfirst-Schiebedächer (Spoilerdächer), mit bevorzugtem Motorantrieb für den über ein Kabelantriebssystem relativ zu einer Dachöffnung bewegbaren Deckel. Der nur aus wenigen Teilen zusammengesetzte Rahmen umfaßt ein aus Kunststoff spritzgeformtes Vorderteil mit nach unten offenen Kabelkanälen und angeformten Eckbereichen für die feste Anbringung der den Deckel an Führungsschienen führenden Rahmen-Seitenteile, die vorzugsweise aus stranggepreßten Aluminiumprofilen abgelängt sind. Die nach unten offenen Kabelkanäle, in welche die Antriebskabel leicht eingelegt werden können, werden durch mindestens ein ebenfalls aus Kunststoff spritzgeformtes Abdeckelement geschlossen. Eine Motorhalteplatte ist als getrennt aus Kunststoff spritzgeformtes Teil vorgesehen, so daß sie aus einem anderen, den Antriebsanforderungen besonders angepaßten Kunststoff mit hoher Maßgenauigkeit geformt werden kann. Der Rahmen läßt sich kostengünstig herstellen und durch Anformung von Montage- und Positionierhilfen einfach und schnell zusammenbauen. Durch Standardisierung seiner wenigen Teile, insbesondere der Motorhalteplatte, kann der Rahmen unterschiedlichen fahrzeugspezifischen Anforderungen kostengünstig angepaßt werden.

### Bezugszeichenliste

- 1: Vorderteil
- 2: Eckbereich
- 3: Seitenteil
- 4: linkes Abdeckelement
- 5: rechtes Abdeckelement
- 6: Motorhalteplatte
- 7: Elektrogetriebemotor
- 8: Führungsschienen
- 9: Kabelführungskanäle
- 10: Ausnehmung
- 11: Kabelkanäle
- 12: Durchführungskanäle
- 13: Zentrale Aussparung
- 14: Antriebsritzel
- 15: Positioniervorsprünge
- 16: Positionieröffnungen
- 17: Auflageflächen
- 18: Rastelemente
- 19: Bohrung
- 20: Bohrung
- 21: Bohrung
- 22: Vorsprünge
- 23: Aufnahmeschlitze
- 24: Verschraubungsstellen
- 25: Positioniervorsprünge
- 26: Positionieröffnungen
- 27: Bohrungen
- 28: Bohrungen
- 29: Thermonietvorsprünge
- 30: Wasserkanal
- 31: Wasserkanal
- 32: Rohrstutzen
- 33: Abdichtkanal
- 34: Bohrungen

## Patentansprüche

1. Aus mehreren Teilen zusammengesetzter Rahmen für ein Fahrzeug-Schiebedach oder -Schiebehebedach zur Führung und Halterung eines einer entsprechenden Dachöffnung zugeordneten bewegbaren Deckels, mit einem als Kunststoffspritzteil ausgebildeten Vorderteil (1) und zwei parallel zueinander angeordneten, Führungsschienen (8) für den Deckel aufweisenden Seitenteilen (3), die mit dem Vorderteil (1) über an dieses angeformte Eckbereiche (2) fest verbindbar sind, wobei am Vorderteil (1), den Eckbereichen (2) und den Seitenteilen (3) Antriebskabel für die Bewegung des Deckels drucksteif verschiebbar geführt sind, die mit einer am Vorderteil (1) über eine Motorhalteplatte (6) angeordneten Antriebsvorrichtung im Antriebseingriff stehen, **dadurch gekennzeichnet, daß** in das Vorderteil (1) zu beiden Seiten einer für die Aufnahme der als getrenntes Kunststoffspritzteil hergestellten Motorhalteplatte (6) eingeformten Ausnehmung (10) nach unten offene Kabelkanäle (11) für die Antriebskabel eingeformt sind, die durch ebenfalls als Kunststoffspritzteile ausgebildete und am Vorderteil positioniert zu befestigende Abdeckelemente (4, 5) verschließbar sind.

2. Rahmen nach Anspruch 1, **dadurch gekennzeichnet, daß** die Motorhalteplatte (6) zwei voneinander beabstandete parallele Durchführungskanäle (12) für die Antriebskabel aufweist, die nach Anbringung der Motorhalteplatte (6) in der Ausnehmung (10) des Vorderteils (1) mit den Kabelkanälen (11) stufenlos fluchten, und die ausgehend von einer zentralen Aussparung (13) in der Motorhalteplatte (6) für das Antriebsritzel (14) mit gegenüberliegenden Durchtrittsöffnungen für den Eingriff des Antriebsritzels (14) mit beiden Antriebskabeln versehen ist.

3. Rahmen nach Anspruch 2, **dadurch gekennzeichnet, daß** die Durchführungskanäle (12) einen von den Kanalenden her bis zur Eingriffsstelle mit dem Antriebsritzel (14) stetig abnehmenden Kreisquerschnitt aufweisen, und daß die Durchführungskanäle (12) an jeweils beiden Enden mit Übergangsfasen oder -abrundungen versehen sind, denen ähnliche Übergangsfasen oder - abrundungen an den benachbarten Eingängen der Kabelkanäle (11) und an den Abdeckelementen (4, 5) entsprechen.

4. Rahmen nach einem der Ansprüche 1 bis 3, **dadurch gekennzeichnet, daß** die Ausnehmung (10) für die Aufnahme der Motorhalteplatte (6) und die Motorhalteplatte (6) selbst zur genauen Ausrichtung der Durchführungskanäle (12) in der Motorhalteplatte (6) zu den anschließenden Kabelkanälen (11) in dem Vorderteil (1) mit paarweise angeordneten Positioniervorsprüngen (15) und -öffnungen (16) und die Ausnehmung (10) mit mehreren voneinander beabstandeten vorspringenden Auflageflächen (17) für die Motorhalteplatte (6) versehen sind.

5. Rahmen nach einem der Ansprüche 1 bis 4, **dadurch gekennzeichnet, daß** die Motorhalteplatte (6) und das Vorderteil (1) im Bereich der Ausnehmung (10) für die Motorhalteplatte (6) mit Rastelementen (18) für die Vorverrastung der Motorhalteplatte (6) am Vorderteil (1) ausgerüstet sind.

6. Rahmen nach einem der Ansprüche 1 bis 5, **dadurch gekennzeichnet, daß** das Vorderteil (1) und die Motorhalteplatte (6) aus unterschiedlichen Kunststoffen spritzgeformt sind, wobei der für die Motorhalteplatte (6) verwendete Kunststoff vergleichsweise eine höhere Festigkeit, insbesondere eine höhere Abriebfestigkeit aufweist und/oder durch Kohlefasern armiert ist.

7. Rahmen nach einem der Ansprüche 1 bis 6, **dadurch gekennzeichnet, daß** der Motor (7) mit dem Vorderteil (1) unter Zwischenlage der Motorhalteplatte (6) verschraubt ist.

8. Rahmen nach einem der Ansprüche 1 bis 7, **dadurch gekennzeichnet, daß** die Abdeckelemente (4, 5) an dem Vorderteil (1) durch eine Kombination von voneinander beabstandeten Klipselementen (22, 23) und Verschraubungen (24) befestigt sind.

9. Rahmen nach einem der Ansprüche 1 bis 8, **dadurch gekennzeichnet, daß** die Seitenteile (3) auf die Eckbereiche (2) des Vorderteils (1) von oben unter Vermittlung des Eingriffs von an das Vorderteil (1) angeformten Positioniervorsprüngen (25) mit in den Seitenteilen (3) angebrachten entsprechenden Positionieröffnungen (26) positioniert aufgelegt und durch Befestigungsmittel fest miteinander vereinigt sind.

10. Rahmen nach Anspruch 9, **dadurch gekennzeichnet, daß** die Befestigungsmittel durch Bohrungen (27) in den Seitenteilen (3) hindurchgeführte und in das Vorderteil (1) eingeschraubte Schrauben und/oder an das Vorderteil angeformte und durch Bohrungen (28) der Seitenteile (3) geführte Thermonietvorsprünge (29) sind.

11. Rahmen nach Anspruch 9 oder 10, **dadurch gekennzeichnet, daß** in den Auflagebereichen der Seitenteile (3) auf das Vorderteil (1) im Vorderteil jeweils ein Abdichtkanal (33) eingeformt ist, der zur Abdichtung der Seitenteile (3) gegenüber dem Vorderteil (1) in den Auflagebereichen mit einem Dichtmittel befüllbar ist.

12. Rahmen nach Anspruch 11, **dadurch gekennzeichnet, daß** das Dichtmittel durch Bohrungen (34) in den Seitenteilen (3) hindurch den Abdichtkanälen (33) zuführbar ist.

## Claims

1. Frame, assembled from a plurality of parts, for a vehicle sliding roof or slide-and-tilt roof, for guiding and mounting a moveable cover assigned to a corresponding roof opening, having a plastic injection moulded front member (1) and two side members (3), arranged parallel to one another and having guide rails (8) for the cover, which side members can be fixed to the front member (1) by corner areas (2) moulded on to the latter, whereby on the front member (1), the corner areas (2) and the side members (3) drive cables for the movement of the cover are in pressure resistant manner displaceably guided, which are drive connected to a drive device arranged on the front member (1) via a motor mounting plate (6), **characterized in that** cable channels (11) for the drive cables, open at the bottom, are moulded into the front member (1) on both sides of a moulded recess (10) for accommodating the motor mounting plate (6), manufactured as a separate plastic injection moulded part, said channels can be closed off by cover elements (4, 5), which are likewise formed as plastic injection moulded parts and to be fixed in position to the front member.

2. Frame according to claim 1, **characterized in that** the motor mounting plate (6) has two parallel feed-through passages (12) for the drive cables separated by a distance from one another, which after fitting the motor mounting plate (6) in the recess (10) of the front member (1) align steplessly with the cable channels (11), and which starting form a central recess (13) in the motor mounting plate (6) for the drive pinion (14) are provided with opposing passage openings for the engagement of the drive pinion (14) with the two drive cables.

3. Frame according to claim 2, **characterized in that** the feed-through passages (12) have a circular cross-section constantly decreasing from the channel ends to the point of engagement with the drive pinion (14), and that the feed-through passages (12) are each provided at both ends with transitional chamfers or roundings, to which similar transitional chamfers or roundings at the adjacent inlets of the cable channels (11) and on the cover elements (4, 5) correspond.

4. Frame according to one of claims 1 to 3, **characterized in that** the recess (10) for accommodation of the motor mounting plate (6) and the motor mounting plate (6) itself are provided with paired positioning projections (15) and positioning apertures (16) for the precise alignment of the feed-through passages (12) in the motor mounting plate (6) with the adjoining cable channels (11) in the front member (1), and the recess (10) is provided with a plurality of projecting bearing surfaces (17) for the motor mounting plate (6), spaced at an interval form one another.

5. Frame according to one of claims 1 to 4, **characterized in that** the motor-mounting plate (6) and the front member (1) are equipped, in the area of the recess (10) for the motor mounting plate (6) with catch elements (18) for prelocating the motor mounting plate (6) on the front member (1).

6. Frame according to one of claims 1 to 5, **characterized in that** the front member (1) and the motor mounting plate (6) are injection moulded from different plastics, the plastic used for the motor mounting plate (6) having a comparatively higher strength, in particular a higher abrasion resistance, and/or being reinforced by carbon fibres.

7. Frame according to one of claims 1 to 6, **characterized in that** the motor (7) is bolted to the front member (1) with the motor mounting plate (6) interposed between them.

8. Frame according to one of claims 1 to 7, **characterized in that** the cover elements (4, 5) are fixed to the front member (1) by a combination of spaced clip elements (22, 23) and screwed connections (24).

9. Frame according to one of claims 1 to 8, **characterized in that** the frame side members (3) are laid on the corner areas (2) of the front member (1) from above, positioning being aided by the engagement of positioning projections (25) moulded on to the front member (1) with corresponding positioning apertures (26) made in the side members (3), and are fixed to one another by fasteners.

10. Frame according to claim 9, **characterized in that** the fasteners are screws introduced through holes (27) in the side members (3) and screwed into the front member (1) and/or hot rivet projections (29) formed on to the front member and led through holes (28) in the side members (3).

11. Frame according to claim 9 or 10, **characterized in that** in each of the areas where the side members (3) bear on the front member (1), a sealing channel (33) is moulded into the front member which can be filled with a sealant in order to seal the side members (3) off from the front member (1).

12. Frame according to claim 11, **characterized in that** the sealant can be delivered to the sealing channels (33) through holes (34) in the side members (3).

## Revendications

1. Cadre composé de plusieurs parties pour un toit coulissant ou un toit coulissant-basculant pour véhicule automobile pour le guidage et la fixation d'un volet mobile associé à une ouverture de toit correspondante, comportant une partie avant (1) réalisée sous la forme de pièce moulée par injection en matière plastique et deux rails de guidage (8), disposés parallèlement l'un par rapport à l'autre, pour des parties latérales (3) comportant le volet qui peuvent être solidement reliées à la partie avant (1) par le biais de zones en coin (2) formées sur celle-ci, des câbles d'entraînement étant posés sur la partie avant (1), les zones en coin (2) et les parties latérales (3) pour le mouvement du volet de manière à pouvoir se déplacer de façon résistante à la pression, câbles qui sont en prise d'entraînement avec un dispositif d'entraînement disposé sur la partie avant (1) par le biais d'une plaque de fixation du moteur (6), **caractérisé en ce que**, dans la partie avant (1), des deux côtés d'un creux (10) formé pour le logement de la plaque de fixation du moteur (6) fabriquée sous la forme de pièce séparée moulée par injection en matière plastique, sont formés des canaux pour câbles (11) ouverts vers le bas pour les câbles d'entraînement qui peuvent être fermés par des éléments de recouvrement (4, 5) également réalisés sous la forme de pièces moulées par injection en matière plastique et à fixer sur la partie avant.

2. Cadre selon la revendication 1, **caractérisé en ce que** la plaque de fixation du moteur (6) comporte deux canaux de passage (12) parallèles, situés à distance l'un de l'autre, pour les câbles d'entraînement qui s'alignent sans gradations avec les canaux pour câbles (11) après montage de la plaque de fixation du moteur (6) dans le creux (10) de la partie avant (1) et qui est munie, à partir d'un évidement central (13) dans la plaque de fixation du moteur (6) pour le pignon d'entraînement (14), d'ouvertures de passage opposées pour l'engrènement du pignon d'entraînement (14) dans les deux câbles d'entraînement.

3. Cadre selon la revendication 2, **caractérisé en ce que** les canaux de passage (12) comportent une section transversale circulaire en décroissance constante des extrémités de canal à l'emplacement d'engrènement dans le pignon d'entraînement (14) et **en ce que** les canaux de passage (12) sont munis, sur les deux extrémités, de chanfreins ou d'arrondis de transition auxquels correspondent des chanfreins ou arrondis de transition similaires sur les entrées adjacentes des canaux de câbles (11) et sur les éléments de recouvrement (4, 5).

4. Cadre selon l'une quelconque des revendications 1 à 3, **caractérisé en ce que** le creux (10) pour le logement de la plaque de fixation du moteur (6) et la plaque de fixation du moteur (6) même sont munis, pour l'orientation précise des canaux de passage (12) dans la plaque de fixation du moteur (6) par rapport aux canaux pour câbles (11) subséquents dans la partie avant (1), de saillies (15) et d'ouvertures (16) de positionnement disposées par paires et le creux (10) de plusieurs surfaces d'appui (17), s'avançant à distance les unes des autres, pour la plaque de fixation du moteur (6).

5. Cadre selon l'une quelconque des revendications 1 à 4, **caractérisé en ce que** la plaque de fixation du moteur (6) et la partie avant (1) sont équipées, au niveau du creux (10) pour la plaque de fixation du moteur (6), d'éléments d'arrêt (18) pour le préenclenchement de la plaque de fixation du moteur (6) sur la partie avant (1).

6. Cadre selon l'une quelconque des revendications 1 à 5, **caractérisé en ce que** la partie avant (1) et la plaque de fixation du moteur (6) sont moulées par injection à partir de matières plastiques différentes, la matière plastique employée pour la plaque de fixation du moteur (6) comportant, en comparaison, une plus grande résistance, en particulier une plus grande résistance à l'usure et/ou étant armée de fibres de carbone.

7. Cadre selon l'une quelconque des revendications 1 à 6, **caractérisé en ce que** le moteur (7) est vissé à la partie avant (1) par l'intermédiaire de la plaque de fixation du moteur (6).

8. Cadre selon l'une quelconque des revendications 1 à 7, **caractérisé en ce que** les éléments de recouvrement (4, 5) sont fixés sur la partie avant (1) par une combinaison d'éléments à clips (22, 23) à distance les uns des autres et de vissages (24).

9. Cadre selon l'une quelconque des revendications 1 à 8, **caractérisé en ce que** les parties latérales (3) sont posées sur les zones en coin (2) de la partie avant (1), à partir du haut, par l'intermédiaire de l'engrènement de saillies de positionnement (25) formées sur la partie avant (1) avec des ouvertures de positionnement (26) correspondantes réalisées sur les parties latérales (3), et assemblées solidement l'une à l'autre par des moyens de fixation.

10. Cadre selon la revendication 9, **caractérisé en ce que** les moyens de fixation sont des vis introduites à travers des trous (27) dans les parties latérales (3) et vissées dans la partie avant (1) et/ou des saillies à rivetage thermique (29) formées sur la partie avant et introduites à travers des trous (28) des parties latérales (3).

11. Cadre selon la revendication 9 ou 10, **caractérisé en ce que**, dans les zones d'appui des parties latérales (3) sur la partie avant (1), un canal d'étanchéité (33) est formé dans la partie avant, canal qui peut être rempli de produit d'étanchéité pour l'étanchéification des parties latérales (3) par rapport à la partie avant (1) dans les zones d'appui.

12. Cadre selon la revendication 11, **caractérisé en ce que** le produit d'étanchéité peut être amené vers les canaux d'étanchéité (33) à travers des trous (34) dans les parties latérales (3).
